# EUROPEAN PATENT APPLICATION

(11) **EP 3 542 645 A1**
(43) Date of publication of application: **25.09.2019**
(21) Application number: 16921641.3
(22) Date of filing: 21.11.2016
(51) Int. Cl.: A23L 23/00, A47J 27/14, A47J 43/044, B67D 3/00

(54) **SOUP SUPPLY APPARATUS**

(71) Applicant: Techno System Co.,Ltd., Yokohama-shi, Kanagawa 220-8119 (JP)
(72) Inventor: IKUTA, naoyuki, Yokohama-shi Kanagawa 236-0054 (JP)
(74) Representative: Roscoe, Paul
(86) International application number: PCT/JP2016/004937
(87) International publication number: WO 2018/092177

(57) **Abstract**

A soup supply apparatus of the present invention is characterized in that, in a soup supply apparatus X that supplies, in fixed quantities, soup that is housed in a hopper through rotation of an inner valve 26 and back-and-forth movement of a plunger 30, an engaging and detaching means 61 is configured by: a cylindrical first engaging body 62 that is provided in a state such as to be fitted outside a lower end portion of an output shaft 14a of a stirring motor and has an engaging portion; and a cylindrical second engaging body 63 that has an engaged portion that is engaged with and detached from the engaging portion and is provided in a state such as to be fitted outside an upper end portion of a vertical rotation shaft. A latera-direction engagement hole 64 that communicates with an insertion hole that is formed in the upper end portion of the vertical rotation shaft is formed in the cylindrical second engaging body. A rod-shaped inserting portion 65b of a lock bolt 65 is inserted into the engagement hole and the insertion hole. When at least a hopper upper lid and the vertical rotation shaft are cleaned, in a state in which a free end portion of an upper-portion housing box of a machine body is lifted upwards and the hopper upper lid is removed from the hopper, the lock bolt is pulled out of the engagement hole and the insertion hole, and the cylindrical second engaging body 63, the vertical rotation shaft 9, and the hopper upper lid 8 can thereby be disassembled. When the hopper upper lid and the vertical rotation shaft that has a stirring blade is cleaned, at least these components (the upper lid and the vertical rotation shaft) can be easily disassembled, and these components can be easily coupled after cleaning as well.

## Description

### BACKGROUND OF THE INVENTION

### 1. Field of the Invention

The present invention relates a soup supply apparatus. In particular, the present invention relates to a soup supply apparatus that supplies, in prescribed quantities, soup containing solid ingredients.

### 2. Description of the Related Art

Patent Literature 1 to Patent Literature 4 each describe a soup supply apparatus that supplies soup in prescribed quantities. First, a characteristic matter of the supply apparatus in Patent Literature 1 is a "cooling apparatus." The cooling apparatus includes: a machine body that is provided with a pump that supplies soup in fixed quantities and a pump driving source; a hopper that is detachably set in the pump; and an electronic cooling element body that includes a cooling plate that is in direct or indirect surface-contact with a portion in the periphery of the hopper. In addition, the cooling apparatus is configured by: an annular support body that is integrally provided in the machine body; and a control unit that is provided in either of the annular support body and the machine body, and supplies power to the cooling unit via wiring. A plurality of cooling units are provided at a required interval in a circumferential direction in an interior space of the annular support body.

Next, in paragraph 0036, paragraph 0067, and FIG. 2 of Patent Literature 2, the following is described with reference to the drawings (reference numbers are those used in Patent Literature 2). That is, a dispensing apparatus X includes a first driving source 32 and a second driving source 34. Driving force of the first driving source 32 is transmitted to a rear end portion 11b of an inner cylindrical body 11 via a power transmitting means 33. The inner cylindrical body 11 is intermittently rotated by a predetermined amount by the driving force of the first driving source 32. Meanwhile, the driving force of a second driving source 34 is transmitted to a rear end portion of a drive operation rod 30 via a power conversion mechanism 35 that includes a clutch. The drive operation rod 32 is moved back and forth to a predetermined position by the driving force of the second driving source 34.

Next, Patent Literature 3 describes the following. That is, the supply apparatus includes: a pump and a pump driving source that are provided on a lower end portion side of a machine body and in which the pump supplies soup in fixed quantities; an upper-portion housing box that is provided in an upper end portion of the machine body such as to freely rotate and in which a stirring driving source is provided therein; a rotation shaft that has a polygonal recessing portion or protruding portion that engages with an output shaft of a vertical shaft of the stirring driving source in an upper end portion that passes through a center portion of a hopper upper lid, and has a stirring blade that stirs the soup in a long rod-like lower end portion; the hopper upper lid that is provided in a portion of the rotation shaft near an upper end portion; a hopper onto which the hopper upper lid is fitted and that has a cone-shaped portion in a lower end portion; an annular support body that supports the cone-shaped portion of the hopper and includes a heating means; and a control unit and a power supply board that are provided in either of the machine body and the annular support body. A temperature sensor that detects a temperature state of the hopper is provided on a wall of the annular support body.

Furthermore, Patent Literature 4 also describes a soup supply apparatus that supplies, in fixed quantities, soup that is housed in a hopper through rotation of an inner valve and back-and-forth movement of a plunger. The soup is stirred by rotation of a vertical rotation shaft that is connected to a lower end portion of an output shaft of a stirring motor that is fixed to an upper surface of a horizontal support plate that is provided in an upper end portion of a machine body, via an engaging means, and has a stirring blade in a long rod-like lower end portion.

As is clear from the descriptions in Patent Literature 1 to Patent Literature 4, above, "a soup supply apparatus (X) that includes, in a machine body (1), each of: a pump (2) that includes an outer valve (21) that serves as a fixed member, an inner valve (26) that serves as a rotating member, and a plunger (30) that performs rectilinear motion; a driving source (32, 34) of the pump; an annular support body (5) that is integrally provided in the machine body such as to be positioned above the outer valve; a hopper (6) that is set in an inner wall of the annular support body such as to be freely fitted and detached, and in which a lower end portion is removably coupled with a pump head (22) of the outer valve via a fastening means 23; a hopper upper lid (8) that is fitted onto the hopper such as to be freely fitted and detached; a vertical rotation shaft (9) that passes through a center portion of an upper wall of the hopper upper lid (8) and has a stirring blade in a long rod-like lower end portion; a stirring motor (14) in which an output shaft is connected to the vertical rotation shaft via an engaging and detaching means; an upper-portion housing box (1d) that includes the stirring motor therein and is pivotally supported to an upper end portion of the machine body such as to freely rotate; and a control unit that controls driving of the driving source (32, 34) of the pump, wherein soup that is housed in the hopper is supplied in fixed quantities through rotation of the inner valve (26) and back-and-forth movement of the plunger (30)" is a publicly known technology (reference numbers used in Patent Literature 3 are applied for convenience).

However, in Patent Literature 1 to Patent Literature 4, the vertical rotation shaft that has the stirring blade, the hopper upper lid that supports the upper end portion of the vertical rotation shaft such as to freely rotate, and a component (an engaging body on the upper lid side) with a polygonal recessing portion or protruding portion on the upper lid side that connects the upper end portion of the vertical rotation shaft and the output shaft of the stirring motor cannot be easily disassembled. Therefore, when cleaning is performed, these components (such as the upper lid and the vertical rotation shaft) are cleaned as is without being disassembled. Consequently, a problem arises in that the hopper upper lid and the vertical rotation shaft cannot be easily and sufficiently cleaned.

In addition, improvements, such as enabling reliable connection between the output shaft of the stirring motor and the upper end portion of the vertical rotation shaft, reliable support such that the vertical rotation shaft does not sway in a radially outward direction, visual confirmation of the temperature state of the temperature of the hopper (the soup housed therein), and acquisition of information regarding the soup by a mobile terminal that is present in the periphery of the machine body, are desired.
[Patent Literature 1] Japanese Patent Laid-open Publication No. 2005-253355
[Patent Literature 2] FIG. 3 of Japanese Patent Laid-open Publication No. 2008-195410
[Patent Literature 3] Re-publication (A1) of International Patent Publication No. WO2010/050043
[Patent Literature 4] Re-publication (A1) of International Patent Publication No. WO2003/031265

### SUMMARY OF THE INVENTION

In light of the issues of Patent Literature 1 to Patent Literature 4, the main object of the present invention is to enable, when a hopper upper lid and a vertical rotation shaft that has a stirring blade are cleaned, at least these components (the hopper upper lid and the vertical rotation shaft) to be easily disassembled, and enable these components to be easily coupled after cleaning as well. In addition, a second object of the present invention is to enable a cylindrical first engaging body on an output shaft side and a cylindrical second engaging body on the vertical rotation shaft side to be easily and reliably engaged by a free end portion of an upper-portion housing box of a machine body being lowered in a downward direction. Furthermore, a third object of the present invention is to support the vertical rotation shaft to the hopper upper lid in a stable state. Other objects are specified by dependent claims.

A soup supply apparatus of the present invention preferably includes, in a machine body 1, each of: a pump 2 that includes an outer valve 21, an inner valve 26, and a plunger that performs rectilinear motion; a pump driving source 3; an annular support body 5 that is integrally provided in the machine body such as to be positioned above the outer valve; a hopper 6 that is directly or indirectly set on a wall of the annular support body; a hopper upper lid 8 that is freely fitted onto the hopper; a vertical rotation shaft 9 that passes through a center portion of an upper wall of the hopper upper lid and has a stirring blade in a long rod-like lower end portion; a stirring motor 14 of which a lower end portion of an output shaft and an upper end portion of the vertical rotation shaft are connected by an engaging and detaching means; an upper-portion housing box 1d that includes the stirring motor therein and is pivotally supported to an upper-end edge portion of the machine body such as to freely rotate; and a control unit that controls driving of the pump drive source. In the soup supply apparatus X, soup that is housed in the hopper is supplied in fixed quantities through rotation of the inner valve 26 and back-and-forth movement of the plunger 30. The engaging and detaching means 61 is configured by: a cylindrical first engaging body 62 that is provided in a state such as to be fitted outside a lower end portion of an output 14a of the stirring motor and has an engaging portion; and a cylindrical second engaging body 63 that has an engaged portion that is engaged with and detached from the engaging portion and is provided in a state such as to be fitted outside an upper end portion of the vertical rotation shaft. A lateral-direction engagement hole 64 that communicates with an insertion hole 10 that is formed in the upper end portion of the vertical rotation shaft is formed in the cylindrical second engaging body. A rod-shaped inserting portion 65b of a lock bolt 65 is inserted into the engagement hole and the insertion hole. When at least the hopper upper lid and the vertical rotation shaft are cleaned, in a state in which a free end portion of the upper-portion housing box is lifted upwards and the hopper upper lid is removed from the hopper, the lock bolt is pulled out of the engagement hole and the insertion hole, and the cylindrical second engaging body 63, the vertical rotation shaft 9, and the hopper upper lid 8 are thereby disassembled.

In the above-described configuration, an urging means 66 that is wound around a stirring motor output shaft that passes through a bottom wall of the upper-portion housing box is provided between the bottom wall of the upper-portion housing box and an upper portion of the cylindrical first engaging body. The urging means urges the cylindrical first engaging body that is provided such as to freely slide in an axial direction of the stirring motor in a direction engaging with the cylindrical second engaging body at all times. In addition, a short cylindrical bearing member that supports the vertical rotation shaft is fixedly provided in a center portion of an upper wall of the hopper upper lid 8. Furthermore, a temperature sensor that detects a temperature of the hopper 6 is provided on an inner circumferential wall between an upper end opening and a lower end opening of the annular support body. The control unit displays the temperature of the hopper detected by the temperature sensor in a display unit that is provided in the machine body 1. Furthermore, the machine body 1 has a pair of left and right operating boxes 1c that protrude in a substantially horizontal state from a front wall of a vertical control box 1b in which the control unit and a power supply board are provided therein. The display unit that displays a temperature of the soup is provided on a front surface of at least either of the pair of left and right operating boxes. Moreover, the control unit transmits at least a plurality of pieces of information related to soup that is stored in the storage unit to the periphery of the machine body 1 via an information transmitting means.

### EFFECTS OF THE INVENTION

(a) According to a first aspect of the invention, in the cylindrical second engaging body that is provided in the upper end portion of the vertical rotation shaft, when cleaning is performed, when the lock bolt that locks the cylindrical second engaging body and the vertical rotation shaft is pulled out in a state in which the free end portion of the upper-portion housing box of the machine body is lifted upwards, both components (the cylindrical second engaging body and the vertical rotation shaft) can be disassembled. In addition, the vertical rotation shaft that has a stirring blade can be pulled out in a downward direction from the hopper upper lid. Therefore, all constituent components are placed in a disassembled state. Consequently, the cylindrical second engaging body, the vertical rotation shaft, and the hopper upper lid can be easily and sufficiently completely cleaned. In addition, the disassembled components can be easily assembled in the reverse order.
(b) According to a second aspect of the invention, the urging means that is wound around the output shaft that passes through the bottom wall of the upper-portion housing box is provided between the bottom wall of the upper-portion housing box and the upper end portion of the cylindrical first engaging body. The urging means urges the cylindrical first engaging body that is provided such as to freely slide in the axial direction of the output shaft in a direction engaging with the cylindrical second engaging body that is capable of rotating in a predetermined position at all times. Therefore, when the free end portion of the upper-portion housing box of the machine body is lowered downward, the engaging portion of the cylindrical first engaging body and the engaged portion of the cylindrical second engaging body are quickly and reliably engaged.
(c) According to a third aspect of the invention, the short cylindrical bearing member that supports the vertical rotation shaft is provided in the center portion of the upper wall of the hopper upper lid, such as on either (or both) of an upper surface and a lower surface of the upper wall. Therefore, the vertical rotation shaft can be supported to the hopper upper lid in a stable state.
(d) According to a fourth aspect and a fifth aspect of the invention, the temperature sensor that detects the temperature of the hopper is provided on the inner circumferential wall between the upper opening and the lower opening of the annular support body. The control unit displays the temperature of the hopper detected by the temperature sensor in the display unit provided in the machine body (1). Therefore, a heating temperature or a cooling temperature of the hopper can be visually confirmed. Consequently, a heating or cooling switch can be freely turned "ON" as desired.
(e) According to a sixth aspect of the invention, at least a plurality of pieces of information related to soup that is stored in the storage unit can be transmitted to the periphery of the machine body (1) via the information transmitting means. Therefore, a mobile terminal that is capable of acquiring the information can easily ascertain information such as whether the soup is soup that contains solid ingredients, soup that contains no solid ingredients, soup that contains large pieces of solid ingredients, soup that contains small pieces of solid ingredients, soup that contains tofu, vegetable soup, or pork miso soup, the quantity of soup, calories, and price.

### BRIEF DESCRIPTION OF THE DRAWING

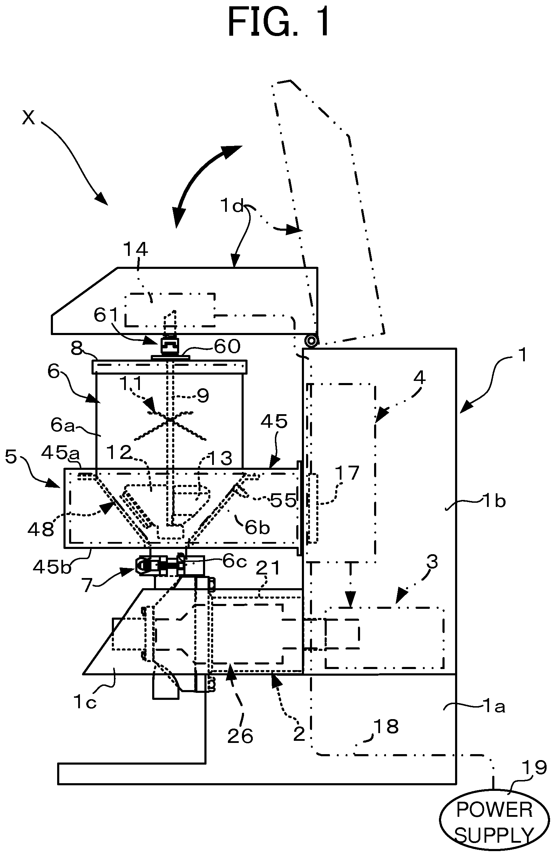

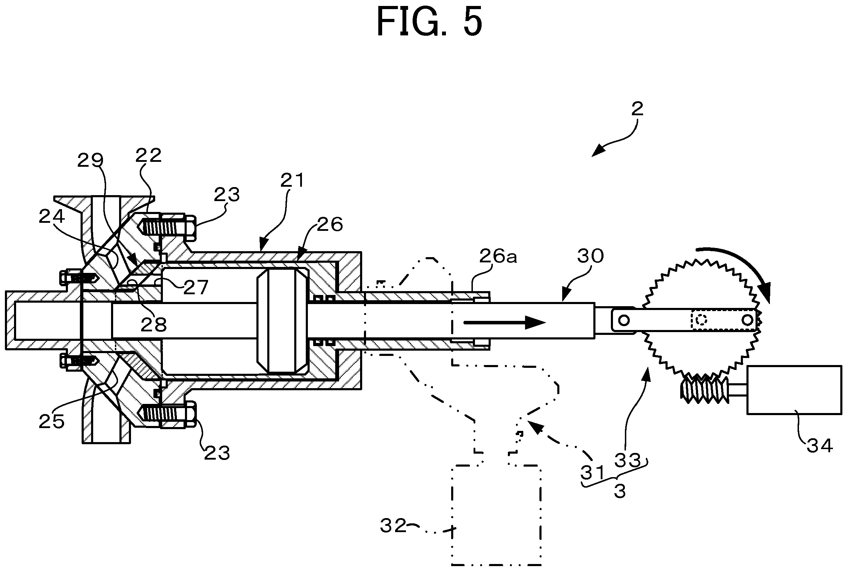

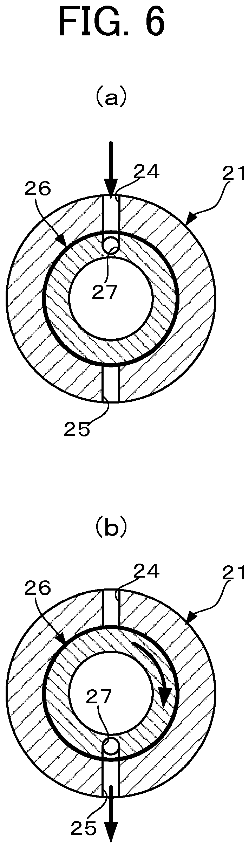

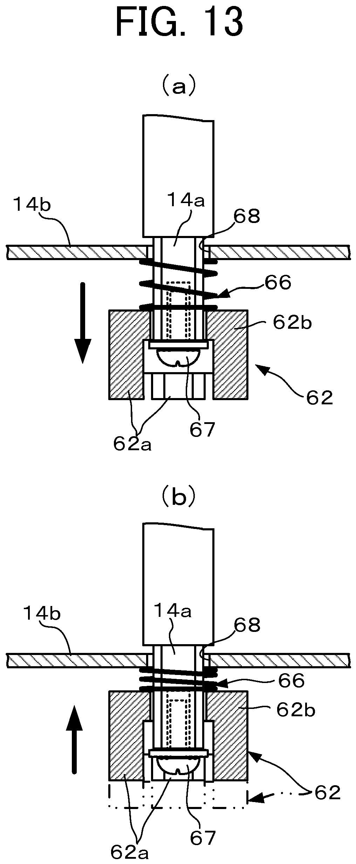

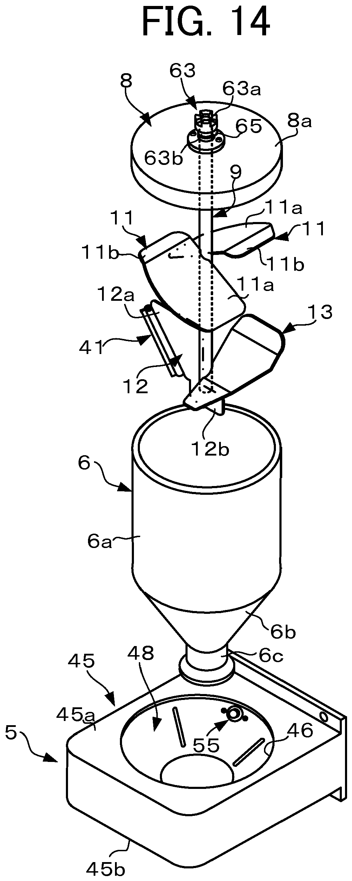

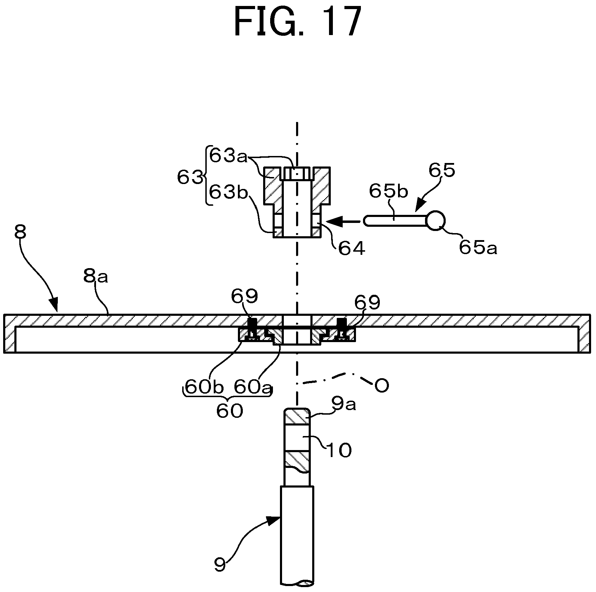

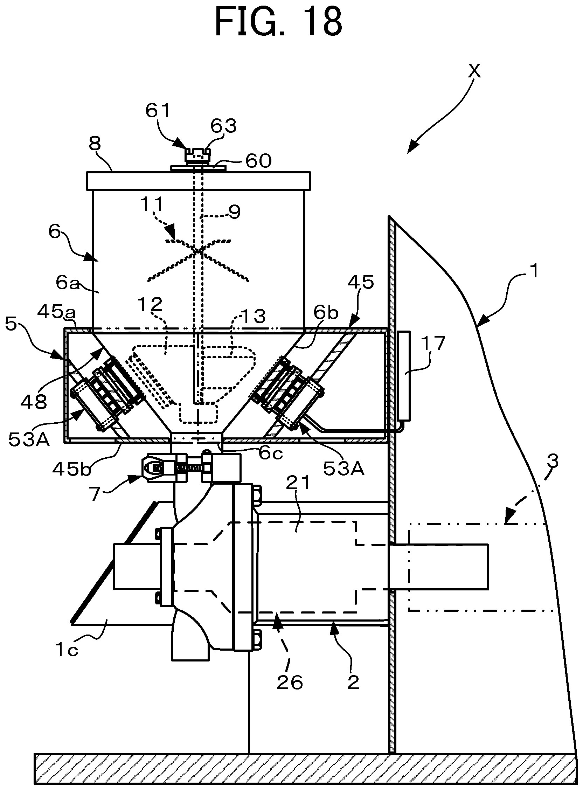

FIG. 1 to FIG. 16 are explanatory diagrams according to a first embodiment of the present invention. FIG. 17 is an overall cross-sectional explanatory diagram according to a second embodiment of the present invention in which a bearing member is fixed to a lower surface of a hopper upper lid. FIG. 18 is an explanatory diagram according to a third embodiment of the present invention in which a cooling means is provided in an annular support body of the present invention.
FIG. 1 is an overall explanatory diagram from a right-side view.
FIG. 2 is an overall explanatory diagram from a front view.
FIG. 3 is an overall cross-sectional explanatory diagram of an example of a pump.
FIG. 4 is an explanatory diagram of main sections (in a state in which an inner valve is rotated).
FIG. 5 is an explanatory diagram of the main sections (in a state in which a plunger is retracted).
FIG. 6A and Fig. 6B are conceptual diagrams of a state of communication of an opening of the inner valve with a suction hole and a discharge hole of an outer valve, in which FIG. 6A shows a state in which the suction hole of the outer valve and the opening of the inner valve are communicated, whereas Fig. 6B shows a state in which the discharge hole of the outer valve and the opening of the inner valve are communicated.
FIG. 7 is an overall explanatory diagram of main sections.
FIG. 8 is an explanatory diagram showing an overall cross-sectional view of the main sections in FIG. 7.
FIG. 9 is a partial overall cross-sectional explanatory diagram of main sections.
FIG. 10 is an explanatory diagram showing a perspective view of the main sections in FIG. 9.
FIG. 11 is an explanatory diagram in which components shown in FIG. 9 are coupled.
FIG. 12 is an explanatory diagram of a state in which a free end portion of an upper-portion storage box of a machine body is lifted upwards, from a front view.
FIG. 13A is an overall explanatory diagram of a state in which an urging means is extended and FIG. 13B is an overall explanatory diagram of a state in which the urging means is contracted.
FIG. 14 is a perspective view of main sections (a cylindrical second engaging body, a hopper upper lid, a vertical rotation shaft, and an annular support body).
FIG. 15 is a perspective view of main sections (blades of the vertical rotation shaft).
FIG. 16 is an explanatory diagram in which a hopper is set in the annular support body (including an enlarged view of a temperature sensor).
FIG. 17 is an overall cross-sectional explanatory diagram according to a second embodiment of the present invention.
FIG. 18 is a partial overall cross-sectional explanatory diagram according to a third embodiment of the present invention, from a side view.
FIG. 19 is a block diagram in which a machine body according to an embodiment includes an information transmitting means.

### EXPLANATION OF REFERENCE NUMBERS

- X:: soup supply apparatus
- 1:: machine body
- 2:: pump
- 3:: pump driving source
- 4:: control unit
- 5:: annular support body
- 6:: hopper
- 6b:: cone-shaped portion
- 6c:: lower end portion
- 8:: hopper upper lid
- 9:: vertical rotation shaft
- 10:: insertion hole
- 11:: stirring blade
- 14:: stirring motor
- 14a:: output shaft
- 14b:: motor base plate
- 20:: operating panel
- 21a:: display unit
- 53:: heating means (mainly an induction heating coil)
- 53A:: cooling means (mainly a Peltier element)
- 55:: temperature sensor
- 56:: support member
- 58:: spring member
- 61:: engaging and detaching means
- 62:: cylindrical first engaging body
- 63:: cylindrical second engaging body
- 64:: engagement hole
- 65:: lock bolt
- 65a:: knob portion
- 65b:: rod-shaped inserting portion
- 66:: urging means
- 67:: fixture
- 71:: storage unit
- 73:: information transmitting means

### DETAILED DESCRIPTION OF THE PREFERRED EMBODIMENTS

A preferred embodiment for carrying out the present invention, shown in FIG. 1 to FIG. 16, will hereinafter be described.

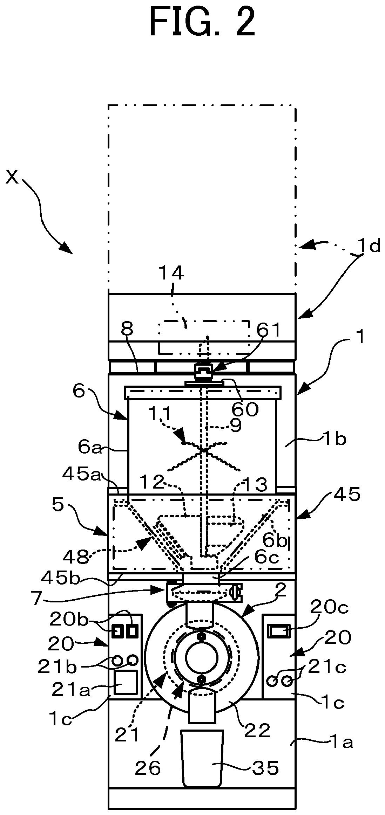

### (1) Environment for carrying out the invention: FIG. 1 and FIG. 2

FIG. 1 and FIG. 2 are overall explanatory diagrams showing an environment for carrying out the invention. In FIG. 1 and FIG. 2, reference number X denotes a soup supply apparatus. Reference number 1 denotes a machine body that includes a pump 2 that supplies, in fixed quantities, soup containing solid ingredients and a pump driving source 3. The pump 2 is provided on a front surface of the machine body 1 such as to protrude in a horizontal direction. Reference number 4 denotes a control unit that is provided inside the machine body 1. The control unit 4 performs various types of control. For example, the control unit 4 acquires a detection signal from a temperature sensor, and turns ON and OFF a supply power source (high-frequency power) for an induction heating coil; controls a heating temperature for a hopper such that a preset temperature set in a storage unit is maintained; performs control such that a temperature state of the hopper is displayed in a display unit; outputs information related to soup that is stored in the storage unit to an information transmitting means; and turns ON and OFF drive power supplies for the pump driving source 3 and a stirring blade driving source.

Reference number 5 denotes a hopper annular support body (hopper cradle) that is integrally provided in the machine body 1 such as to be positioned above the pump. A support member that includes a temperature sensor 55, described hereafter, is fixed inside the annular support body 5.

Reference number 6 denotes a hopper that freely fits onto a cone-shaped annular wall of the annular support body 5. When a cone-shaped portion (a circular cylindrical portion that is tapered downward) of the hopper 6 is supported by the above-described cone-shaped annular wall, a short cylindrical lower end portion 6c of the hopper 6 protrudes from a lower surface of the annular support body 5. The short cylindrical lower end portion 6c is set in an upper opening of the pump 2 via a connecting means 7 such as to be freely attached and detached.

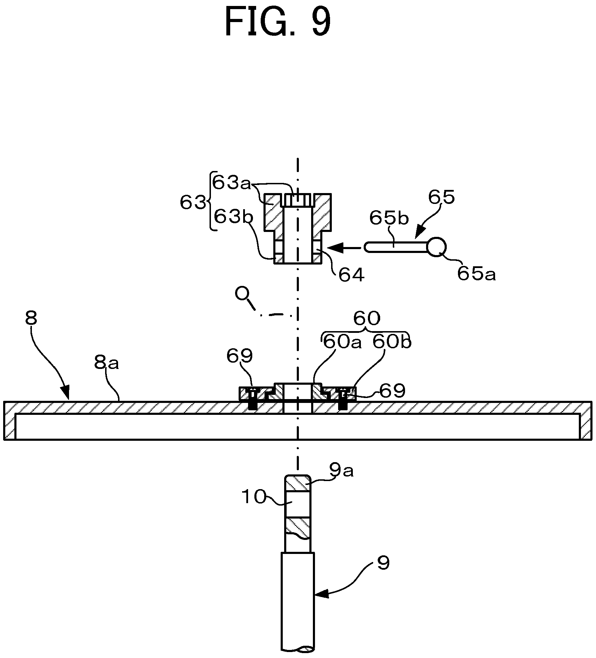

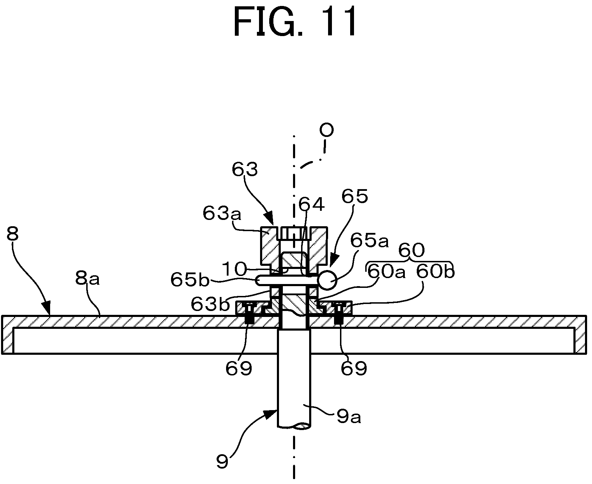

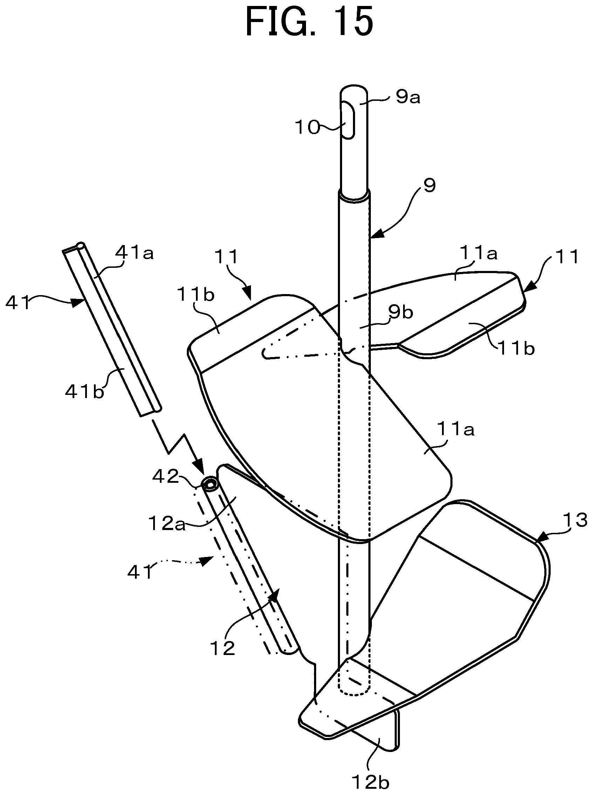

Reference number 8 denotes a hopper upper lid (referred to, hereafter, as an "upper lid"). A vertical rotation shaft 9 hangs from the upper lid 8 such as freely rotate. In the vertical rotation shaft 9, an axial-direction insertion hole 10 is formed in a small-diameter upper end portion 9a that passes through a substantially center portion of an upper wall 8a of the upper lid 8 that is formed into a substantially cap shape. In addition, in a large-diameter long rod-like lower end portion 9b that continues from the small-diameter upper end portion 9a, stirring blades 11 that stir soup containing solid ingredients, a scorch-prevention blade 12 that has a springy resin piece that is in sliding contact with an inner circumferential surface of the cone-shaped portion of the hopper, and a pushing blade 13 that pushes food to be consumed towards an upper opening side of the pump 2 are provided (see FIG. 15). The scorch-prevention blade 12 and the pushing blade 13 are provided in a position below the stirring blades 11. The small-diameter upper end portion 9a of the vertical rotation shaft 9 can be inserted into a center hole in the upper lid 8. In this case, the small-diameter upper end portion 9a protrudes by a predetermined amount from a shaft hole of a bearing member 60 that is fixed to an upper surface of the upper wall 8a of the upper lid 8 by a plurality of fixtures. In addition, an end surface of the large-diameter long rod-like lower end portion 9b is in contact with a lower surface of the upper wall 8a of the upper lid 8. Therefore, when the components are disassembled, the vertical rotation shaft 9 can be pulled out of the upper lid 8 (see FIG. 9 and FIG. 11).

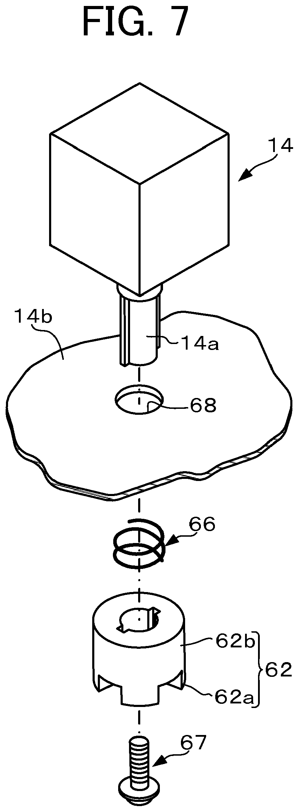

Reference number 1d denotes an upper-portion housing box that is pivotally mounted on a front surface side of an upper end portion of the machine body 1 by a hinge. A stirring motor 14 is provided inside the upper-portion housing box 1d with a motor base plate 14b therebetween. An output shaft 14a of the stirring motor 14 and the upper end portion of the vertical rotation shaft 9, described above, are freely engaged and detached by an engaging and detaching means 61 (here, a cylindrical first engaging body 62 that operates together with the output shaft 14a and a cylindrical second engaging body 63 that operates together with the vertical rotation shaft 9), shown in FIG. 7 to FIG. 15. In addition, the upper end portion of the vertical rotation shaft 9 is stably supported to the bearing member 60 that is fixed to one side surface of the upper lid 8. Furthermore, the cylindrical first engaging body 62 on the output shaft 14a side that configures the engaging and detaching means 61 is urged at all times in an engaging direction by an urging means 66. Characteristic matters of the present invention, such as the engaging and detaching means 61 and the urging means 66, will be described hereafter.

### (2) Detailed configuration of the machine body 1

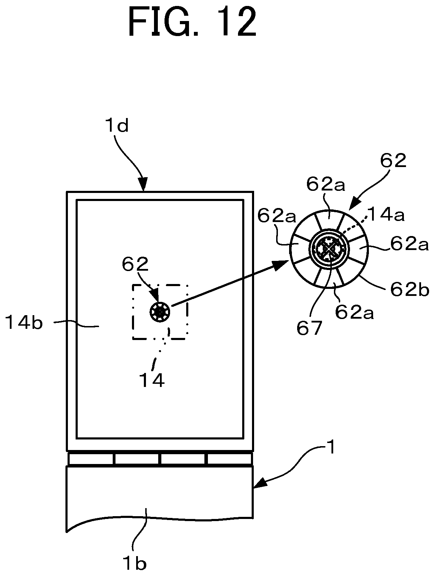

The machine body 1 will be further described. Reference number 1a denotes a lower-portion support base. Reference number 1b denotes a vertical control box that is integrally provided above the lower-portion support base 1a and has an opening for discharging heat in a rear wall. Reference number 1c denotes a pair of left and right operating boxes that are integrally provided above the lower-portion support base 1a such as to intersect with the vertical control box 1b. Reference number 1d denotes the above-described upper-portion housing box. In the upper-portion housing box 1d, a lower edge portion of a rear end portion is connected to an upper-end edge portion of the vertical control box 1b by a hinge. Therefore, for example, the upper-portion housing box 1d can be freely lifted upwards by a hand being inserted into a lower surface of a free end portion of the upper-portion housing box 1d as appropriate. In this case, the cylindrical first engaging body 62 on the output shaft 14a side separates from the cylindrical second engaging body 63 of the vertical rotation shaft 9 (see FIG. 12).

Here, regarding dependent matters of the present invention, the temperature sensor 55 that detects the temperature of the hopper 6 is provided on a slope-shaped inner circumferential wall 48 between an upper end opening and a lower end opening of the annular support body 5. The control unit 4 displays the temperature of the hopper 6 detected by the temperature sensor 55 in a liquid-crystal display unit 21a of an operating panel 20 that is provided in the machine body 1. According to the embodiment, as shown in FIG. 1, the machine body 1 has the pair of left and right operating boxes 1c and 1c that protrude in a substantially horizontal state from the front wall of the vertical control box (1b) inside which the control unit 4 and a power supply board 17 are provided. Therefore, the operating panel 20 is provided on a front surface of at least either of the pair of left and right operating boxes 1c (such as on the left-side operating box 1c in FIG. 2). In addition to the display unit 21a, various types of operating buttons 20, such as a power button, a button for selecting the speed of the stirring motor 14, and a button for continuing a discharge state, are provided in the operating panel 20. In addition, an operating button 20c that enables selection between large and small discharge quantities is provided on the front surface of the other operating box 1c (such as on the right-side operating box 1c in FIG. 2), as well. The box units of the machine body 1 can be arbitrarily changed in design. Therefore, the machine body 1 is not limited to the aspect shown in the drawings.

In addition, the power supply board 17 can be connected to a commercial power supply (alternating current) 19 by a cable 18. Therefore, although an electric circuit is not particularly shown, an alternating current-to-direct current (AC/DC) converter is provided in the power supply board 17. In addition, when the operating buttons (switches) 20b and 20c on the operating boxes 1c are pressed, signals thereof are sent to a storage unit 71. For example, the control unit 4 then controls startup, reversing, and rotation speed of the pump driving source 3 and a stirring driving source 14, and output of high-frequency power to the induction heating coil.

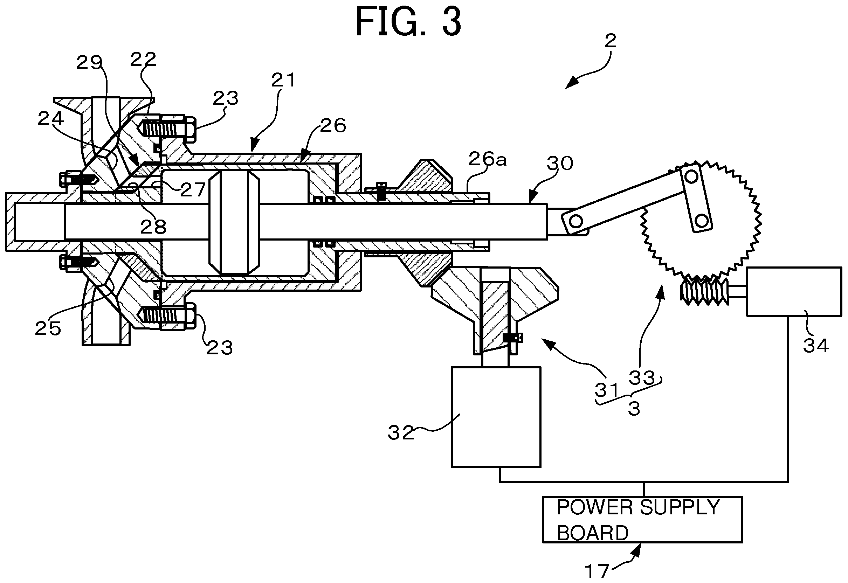

### (3) The pump 2 and the pump driving sources 32 and 34: FIG. 3 to FIG. 6

As is commonly known, the plunger-type pump 2 is configured by an outer valve 21, an inner valve 26 that is rotatably provided in the outer valve, and a plunger 30 that moves back and forth within the inner valve. Here, as shown in FIG. 3, a cylindrical pump head 22 is fixedly connected to a tip end portion of the outer valve 21 by a fastening means (such as a screw bolt). The cylindrical inner valve 26 that has an opening 27 that is capable of communicating with each of a suction hole (upper opening) 24 and a discharge hole 25 formed in the pump head 22 is provided in the outer valve 21 such as to rotate freely.

In addition, a seal 29 that has a through hole 28 that communicates with the opening 27 of the inner valve 26 and can selectively communicate with the suction hole 24 and the discharge hole 25 is fixedly attached to a wall surface on an axial-direction side of the inner valve 26.

FIG. 3 schematically shows the pump driving source 3 that supplies, in fixed quantities, soup that is housed in the hopper 6, through the rotation of the inner valve 26 and the back-and-forth movement of the plunger 30 (well-known technology). When simply described, driving force of a first driving source 32 for rotation of the inner valve 26 is transmitted via a power transmitting means 31 to a protruding inner end portion 26a of the inner valve 26 on the right side in FIG. 3. In addition, driving force of a second driving source 34 for back-and-forth movement of the plunger 30 is transmitted via a power conversion mechanism 33 to a protruding end portion of the plunger 30. Furthermore, the first driving source 32 and the second driving source 34 are electrically connected to the power supply board 17.

In the pump 2, to enable soup containing solid ingredients to be supplied in fixed quantities from the hopper 6, the inner valve 26 is intermittently rotated by a predetermined amount (such as substantially 180 degrees) by the driving force of the first driving source 32. The plunger 30 is moved back and forth by the driving force of the second driving source 34, in correspondence with the intermittent rotation of the inner valve 26. Soup (such as soup containing solid ingredients) inside the pump 2 is supplied in a fixed quantity to a cup 35 that is placed below the discharge opening 25.

### (4) The hopper 6: FIG. 1, FIG. 14, and FIG. 16

The hopper 6 is attached to the suction hole (upper opening) of the pump 2 by a connecting means 7 such as to be freely attached and detached. The hopper 6 is composed of a magnetic metal material and formed into a "funnel shape." The hopper 6 according to the present embodiment is configured by a long cylindrical portion 6a of which an upper end portion is a wide opening, a cone-shaped portion 6b, and a short cylindrical portion (lower end portion) 6c that has a small opening and is connected to the cone-shaped portion 6b. A flange portion for connection is provided around the short cylindrical portion 6c. Here, a configuration of the connecting means 7 that directly or indirectly engages the short cylindrical portion (lower end portion) 6c of the hopper 6 and the pump head 22 will be omitted.

### (5) Characteristic matters of the present invention: FIG. 7 to FIG. 15

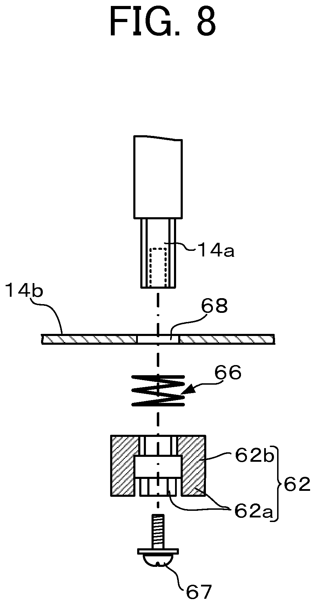

FIG. 7 is an overall explanatory diagram in which the stirring motor 14 that has the downward-oriented output shaft 14a, the motor base plate 14b that has a through hole in a center portion, a pressing spring 66 that serves as an example of the urging means, the cylindrical first engaging body 62, and a fixture 67 that has a flange-like head portion are in a disassembled state. In addition, FIG. 8 is an explanatory diagram showing an overall cross-sectional view of the components in FIG. 7.

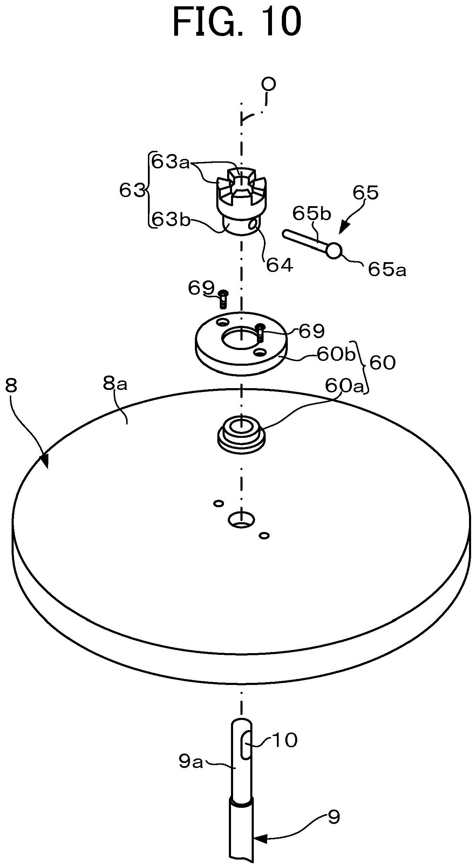

Furthermore, FIG. 9 is a partial overall cross-sectional explanatory diagram of the cylindrical second engaging body 63, the hopper upper lid 8, and the vertical rotation shaft 9. FIG. 10 is an explanatory diagram showing a perspective view of the main sections in FIG. 9. FIG. 11 is an explanatory diagram in which the components shown in FIG. 9 are coupled and shows a state in which the small-diameter upper end portion 9a of the vertical rotation shaft 9 is inserted into the center hole of the hopper upper lid 8 from below.

The engaging and detaching means 61 according to the present embodiment is configured by the cylindrical first engaging body 62 that operates together with the output shaft 14a and the second engaging body 63 that operates together with the vertical rotation shaft 9. When the characteristic matters of the present invention are simply described: (a)a lower end portion of the output shaft 14a of the stirring motor 14 and an upper end portion of the above-described vertical rotation shaft 9 are freely engaged and detached by the engaging and detaching means 61; (b) in addition, the cylindrical first engaging body 62 on the output shaft 14a side that configures the engaging and detaching means 61 is urged at all times in the engaging direction by the urging means 66; (c) and further, the small-diameter upper end portion 9a of the vertical rotation shaft 9 is stably supported to the bearing member 60 that is fixed to one side surface of the upper lid 8. Hereafter, descriptions of matters that can be easily inferred by a person skilled in the art are simply described. Reference numbers are also omitted.

First, in FIG. 7 and FIG. 8, a plurality of protrusions in a vertical direction are provided on an outer circumferential surface of the output shaft 14a of the stirring motor 14 shown in an upper portion of the drawings. In addition, a female screw to which the fixture 67 is screwed in the axial direction is formed on a lower end surface in the output shaft 14a. A through hole 68 of the motor base plate 14b is set taking into consideration the radius of the output shaft 14a, the size of the urging means 66, the radius of the cylindrical first engaging body 62, and the like. The urging means 66 that is pressed against the lower surface of the motor base plate 14b and the upper surface of the cylindrical first engaging body 62 is a coil spring of a predetermined length. However, the urging means 66 may also be a plate spring that is easily elastically deformed.

The cylindrical first engaging body 62 is configured by an engaging portion 62a that has downward-oriented protruding portions and recessing portions, and is continuous in the circumferential direction, and a short cylindrical fitting portion 62b that continues from the engaging portion. A through hole that corresponds to the output shaft 14a and a plurality of grooves that are in a radially outward direction and communicate with the through hole are formed in the short cylindrical fitting portion 62b. A shape of the engaging portion 62a is a matter than can be arbitrarily changed in design. For example, the downward-oriented protruding portions and recessing portions can be continuously formed in a wave shape. The fixture 67 has the flange-shaped head portion. However, a washer (not shown) may be added.

Next, in FIG. 9, FIG. 10, and FIG. 11, the cylindrical second engaging body 63 shown in the upper portion of the drawings is configured by an engaged portion 63a in an upper end portion, and a short cylindrical portion 63b that continues from the engaged portion 63a. A through hole through which the small-diameter upper end portion 9a of the vertical rotation shaft 9 passes and an engagement hole 64 that is in the radial direction perpendicular to a center axis line O of the through hole are formed in the short cylindrical portion 63b. The engaged portion 63a is composed of upward-oriented recessing portions and protruding portions.

As shown in FIG. 11, the cylindrical second engaging body 63 is supported on an upper surface of the bearing member 60 and is capable of rotating in relation to the bearing member 60. The bearing member 60 is configured by a short cylindrical bearing 60a that has a flange in a lower end portion and an annular fixing plate 60b that presses the cylindrical bearing against the upper wall of the upper lid 8. The annular fixing plate 60b is fixed to the upper wall of the upper lid 8 by a plurality of male screws 69. In addition, the insertion hole 10 that is formed in the small-diameter upper end portion 9a of the vertical rotation shaft 9 is a vertical elongated hole. Furthermore, a lock bolt 65 that can be freely inserted into and removed from the engagement hole 64 and the insertion hole 10 is composed of a spherical or plate-shaped knob portion 65a and a rod-shaped inserting portion 65b that protrudes from the knob portion 65a.

Therefore, with reference to the main object of the present invention and FIG. 9 to FIG. 11, the main section of the present invention is as follows: "the engaging and detaching means 61 is configured by: the cylindrical first engaging body 62 that is provided in a state such as to be fitted outside the lower end portion of the output shaft 14a of the stirring motor 14 and has the engaging portion 62a; and the cylindrical second engaging body 63 that has the engaged portion 63a that is engaged with and detached from the engaging portion 62a and is provided in a state such as to be fitted outside the upper end portion 9a of the vertical rotation shaft 9 that passes through the substantially center portion of the upper wall 8a. The lateral-direction engagement hole 64 that communicates with the insertion hole 10 that is formed in the upper end portion of the vertical rotation shaft 9 is formed in the cylindrical second engaging body 63. The rod-shaped inserting portion 65b of the lock bolt 65 is inserted into the engagement hole 64 and the insertion hole 10. When at least the upper lid 8 and the vertical rotation shaft 9 are cleaned, in a state in which the free end portion of the upper-portion housing box 1d of the machine body 1 is lifted upwards and the hopper upper lid is removed from the hopper, the lock bolt 65 is pulled out of the engagement hole 64 and the insertion hole 10. As a result, the cylindrical second engaging body 63, the vertical rotation shaft 9, and the upper lid 8 can be disassembled."

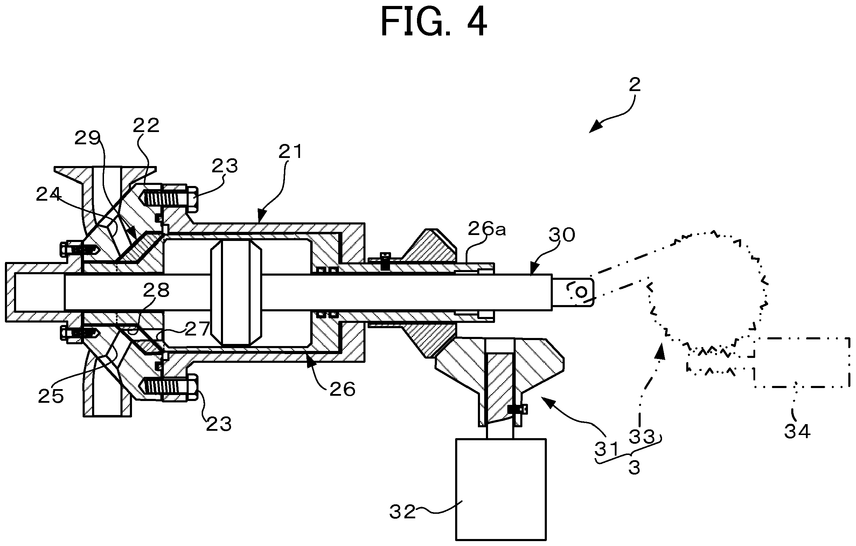

### (6) The upper lid 8 and the vertical rotation shaft 9: FIG. 4, FIG. 10, and FIG. 11

The upper lid 8 is mounted to the upper end portion of the hopper 6 such as to be freely fitted and detached. In addition, the vertical rotation shaft 9 hangs downward on the upper surface side of the upper lid 8 with the cylindrical second engaging body 63 therebetween, such as to rotate freely in relation to the upper lid 8. In addition, reference number 11 denotes a plurality of stirring blades (two stirring blades) that are fixed in an intersecting manner (in an X-shape) in the center portion of the vertical rotation shaft 9. These stirring blades 11 lift the solid ingredients of the soup upwards. According to the present embodiment, the stirring blade 11 is configured by a slope-shaped wide portion 11a and a short horizontal portion 11b that is connected to an upper portion of the wide portion 11a. The solid ingredients of the soup come into contact with the short horizontal portion 11b and the wide portion 11a, and are efficiently stirred.

Reference number 12 denotes a scorch-prevention blade of which a vertical base end portion is fixed to the vertical rotation shaft 9. In a slope-shaped free end portion 12a of the scorch-prevention blade 12, a springy resin piece 41 that is in sliding contact with the inner circumferential surface of the cone-shaped portion 6b of the hopper 6 is detachably mounted.

As shown in FIG. 15, the slope-shaped free end portion 12a has a C-shaped cross-section and has a notch 42 in a length direction. The springy resin piece 41 is configured by an attachment base end portion 41a that is fitted into the sloped free end portion 12a and a springy sliding-contact portion 41b that protrudes by a predetermined amount in the shape of a long plate from the attachment base end portion 41a with the notch 42 therebetween. The springy sliding-contact portion 41b provides a function for scraping off scorch.

Here, according to the present embodiment, in a lower end of the attachment base end portion of the scorch-prevention blade 12, a small protrusion-like stirring portion 12b that extends further downward than a lower end surface of the vertical rotation shaft 9 is provided in a continuous manner. The small protrusion-like stirring portion 12b is positioned within a small opening 43 of the short cylindrical portion 6c of the hopper 6 and serves to prevent the solid ingredients of the soup from getting caught inside the short cylindrical portion 6c. In addition, on the side opposite the scorch-prevention blade 12, the vertical rotation shaft 9 has the pushing blade 13 that pushes food to be consumed towards the upper opening side of the pump 2. The pushing blade 13 has a shape similar to that of the stirring blade 11.

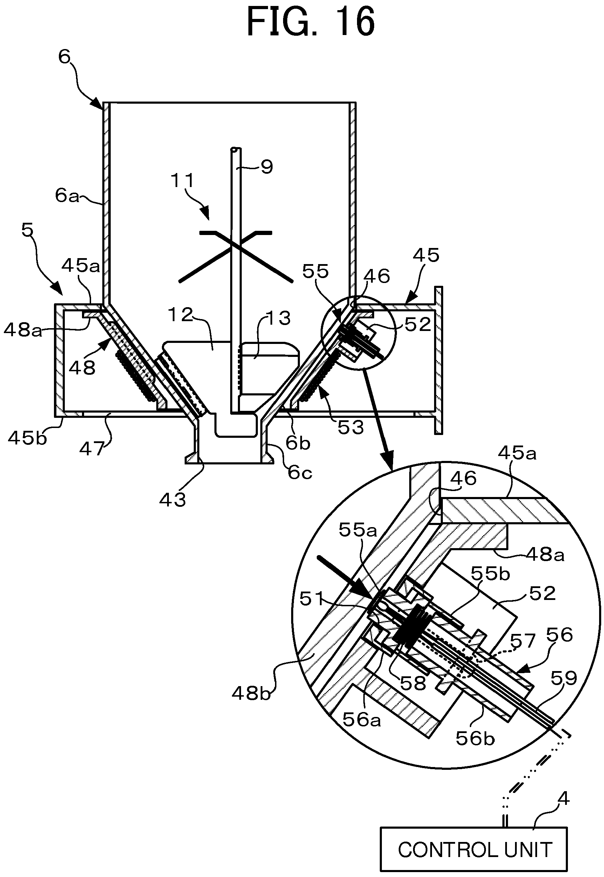

### (7) The annular support body 5: FIG. 16

The annular support body 5 has the slope-shaped annular wall 48 and is attached in a protruding state to the front surface of the control box 1b such as to be positioned in an exterior space between the left and right operating boxes 1c and 1c, and the upper-portion housing box 1d of the machine body 1.

As shown in FIG. 16, the annular support body 5 is configured by a case body 45 that has an upper opening 46 that is formed on an upper wall 45a and a lower opening 47 that is formed on a lower wall 45b, and the cone-shaped annular wall 48 (hopper cradle) that is fixed inside the case body 45 by a flange 48a and a fixing means such as to surround the upper opening 46 and is continuous with the flange 48a.

In addition, a through hole 51 for the temperature sensor is formed in a portion of an upper portion of the above-described cone-shaped annular wall 48. Furthermore, a magnetic shield member 52 for protecting the temperature sensor is provided on an inner wall surface of the cone-shaped annular wall 48 such as to be positioned on an outer side of the through hole 51.

A shape of the magnetic shield member 52 is cylindrical or frame-shaped. According to the present embodiment, the magnetic shield member 52 is formed into an upward-facing U-shaped frame such that a support member that supports the temperature sensor 55 does not become deformed as a result of heat generated by an induction heating coil 53 that is wound in a lower portion side of the inner wall surface of the cone-shaped annular wall 48. Here, the lower opening 47 of the case body 45 is larger than the upper opening 46. The hopper cradle 48 is inserted into the case body 45 from below the case body 45 and the flange 48a thereof is fixed to a lower surface of the upper wall 45a of the case body 45.

### (8) The temperature sensor and the support member; FIG. 16

FIG. 16 includes a configuration of a support member 56 that includes the movable temperature sensor 55. The support member 56 is fixed to the inner wall surface of the cone-shaped annular wall 48 that serves as the hopper cradle by a plurality of fixing means 57 in a state in which the support member 56 is shielded from the induction heating coil 53.

In addition, the support member 56 is configured by a cylindrical guide support plate 56a that has a stepped cross-section and fits into the through hole 51 of the cone-shaped annular wall 48, and a pipe-shaped support plate 56b that is integrally connected to the cylindrical guide support plate 56a by the plurality of fixing means 57 and has an attachment flange that is provided around a center portion of an outer circumferential wall of a pipe-shaped portion.

The temperature sensor 55 is such that a tip end portion 55a thereof is urged at all times in a direction coming into contact with an outer surface of the cone-shaped portion 6b of the hopper 6 by a spring member 58 that is provided in the support member 56 via the through hole 51 of the cone-shaped annular wall 48.

In addition, the movable temperature sensor 55 is such that the tip end portion 55a passes through an unnumbered center hole of the cylindrical guide support plate 56 and protrudes by a predetermined amount from the outer wall surface of the cone-shaped annular wall 48, and a large-diameter cylindrical rear end portion 55b that is connected to the tip end portion 55a is fitted around a tip end portion of the pipe-shaped support plate 56b such as to freely slide.

Furthermore, the spring member 58 is provided inside the temperature sensor 55. One end portion of the spring member 58 pressed against an inner surface of the temperature sensor 55 and the other end portion is pressed against a tip end surface of the second pipe-shaped support plate 56b. Moreover, a connection cable 59 for the temperature sensor 55 is connected to the control unit 4 by passing through the interior of the pipe-shaped support plate 56b.

Here, the cylindrical guide support plate 56a serves as a guide member that guides the movable temperature sensor 55 in a back-and-forth direction. In addition, the combination of the temperature sensor 55 and the support member 56 can be arbitrarily changed in design.

### (9) A relationship between the hopper annular support body and the hopper

Before the hopper 6 is set in the hopper annular support body 5, the tip end portion 55a of the temperature sensor 55 protrudes by a predetermined amount as a result of the spring force of the spring member 58. Meanwhile, when the hopper 6 is set in the hopper annular support body 5 as shown in FIG. 16, the temperature sensor 55 retracts by a predetermined amount into the case body 45 against the spring force of the spring member 58. However, the movable temperature sensor 55 is urged by the spring force of the spring member 58 at all times. Therefore, the tip end portion 55a is reliably in contact with the outer surface of the cone-shaped portion 6b of the hopper 6.

### (10) The power supply board 17 of the control unit 4

The power supply board 17 of the control unit 4 is provided in the annular support body 5 that is a part of the machine body 1 or the control box 1b of the machine body 1. The power supply board 17 is electrically connected to the induction heating coil 53 by wiring and supplies high-frequency power to the induction heating coil 53.

Although not particularly shown, the hopper 6 has a three-layer structure that is composed of an inner ferritic stainless steel layer, an outer ferritic stainless steel layer, and an aluminum layer (heating promotion layer) that is interposed between the stainless steel layers.

As is well known, ferritic stainless steel is a magnetic metal material. Therefore, when high-frequency power is supplied from the power supply substrate 17 to the induction heating coil 53, the cone-shaped portion 6b of the hopper 6 is induction-heated by so called Joule heating. For example, soup containing solid ingredients is heated to about 120 degrees and boils. As a result, depending on the extent of power supply to the induction heating coil 53 and control of the stirring driving source 14, the inner wall surface of the cone-shaped portion 6b may become scorched.

Therefore, according to the present embodiment, when food to be consumed that is housed within the hopper is heated and boiled, the vertical rotation shaft 9 is rotated to the left and right in an alternating manner. When the vertical rotation shaft 9 is rotated, the stirring blades 11 stir the soup in an even state. In addition, the scorch-prevention blade 12 also rotates in the rotation direction of the vertical rotation shaft. At this time, the springy resin piece 41 slides over the inner circumferential surface of the cone-shaped portion 6b of the hopper 6 in a scraping manner. In addition, the control unit 4 acquires the temperature information detected by the temperature sensor 55. For example, when the food to be consumed is boiled (such as when the preset temperature is 120 degrees), the control unit 4 stops power supply to the induction heating coil 53.

Hereafter, in this section, other embodiments of the present invention will be described with reference to FIG. 17 to FIG. 19. Here, regarding the descriptions of the embodiments, sections identical to those according to the first embodiment are given the same or similar reference numbers. Redundant descriptions are omitted.

First, FIG. 17 is an overall cross-sectional explanatory diagram according to a second embodiment (attachment location of the bearing member 60) of the present invention. The matter according to the second embodiment that mainly differs from the first embodiment is that the short cylindrical bearing member 60 is fixedly provided on the lower surface of the center portion of the upper wall of the upper lid 8. In this manner, the bearing member 60 may be provided on either of the upper surface and the lower surface, or both.

Next, FIG. 18 is a partial overall cross-sectional explanatory diagram according to a third embodiment, from a side view. The matter according to the third embodiment that mainly differs from the first embodiment is that the heating means (induction heating coil) 53 is replaces by a cooling means (Peltier element) 53A. The cooling means 53A is configured such that, for example, a total of four cooling units 53A that take heat from the soup inside the hopper 6 via the hopper 6 and cool the soup are fixed on the slope-shaped annular circumferential wall 48 that directly or indirectly cradles the cone-shaped portion 6b of the hopper 6 at an predetermined interval in the circumferential direction of the slope-shaped annular circumferential wall 48. The cooling units 53A are connected by wiring to the power supply board 17 that supplies power.

Here, to improve the cooling effect, the cooling unit 53A is configured by: an accompanying first cooling plate that has a contact surface that is formed to follow a curvature radius of the outer circumferential surface of the cone-shaped portion 6b of the hopper 6; an electronic cooling element body of which a vertical surface that absorbs heat is provided in surface-contact with a fitting recess portion of an outer wall surface of the accompanying first cooling plate; a second cooling plate of which an inner wall surface is provided in a state of surface-contact with a heat discharge surface of the electronic cooling element body; a plurality of cooling fins that are integrally provided on an outer wall surface of the second cooling plate; and a cooling fan that is provided in accompaniment with the cooling fins. The cooling fan, the cooling fins, the second cooling plate, the electronic cooling element body, and the accompanying first cooling pate are integrally engaged by a plurality of unit fixtures and configure a single cooling structural body (Patent Literature 1; publicly known matter).

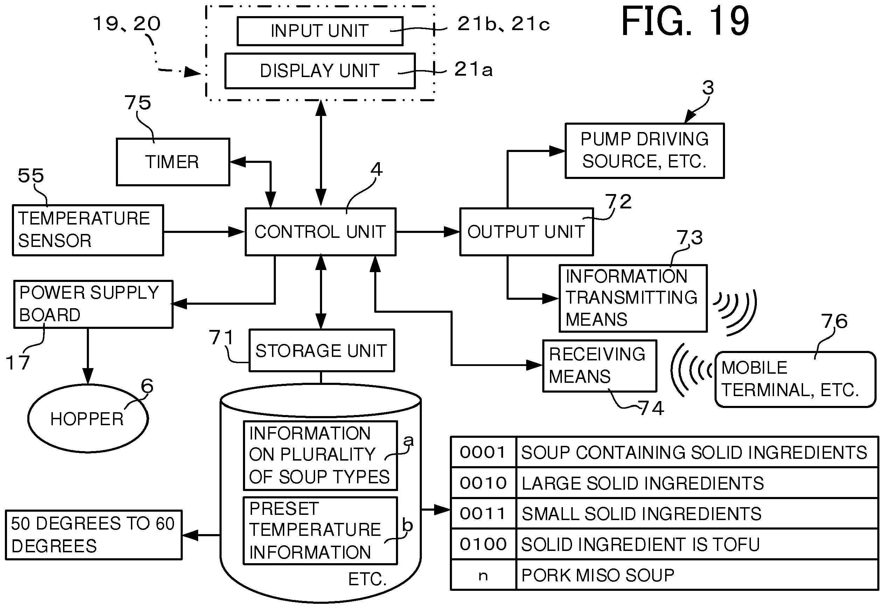

Lastly, FIG. 19 shows accompanying matters added to the first embodiment. In FIG. 19, reference numbers 19 and 20 denote operating panels that have the input units 21b and 21c and the display unit 21a. Reference number 4 denotes the control unit (calculation processing unit) into which information from the input units is inputted. Reference number 71 denotes the storage unit that stores therein a plurality of pieces of information a related to soup, preset temperature information b, pricing information, calorie information, corporate information, and the like. Reference number 72 denotes an output unit that outputs results of calculation processes performed by the control unit. Reference number 73 denotes an information transmitting means for transmitting the plurality of pieces of information related to soup that are stored in the storage unit to the periphery of the machine body 1 via the output unit 72. Reference number 74 denotes a receiving means. Reference number 75 denotes a timer. Reference number 76 denotes a mobile terminal or the like that is capable of acquiring the plurality of pieces of information in response to the receiving means. Here, near-field communication between the machine body 1 that holds the information and the mobile terminal 76 is known communication performed using Bluetooth or the like (such as Japanese Patent Laid-open Publication No. 2003-218763).

### INDUSTRIAL APPLICABILITY

The present invention is suitable for cases in which soup is supplied in fixed quantities through a pump while being heated or cooled by a supply source.

## Claims

1. A soup supply apparatus comprising:
in a machine body (1),
a pump (2) that includes an outer valve (21), an inner valve (26), and a plunger (30) that performs rectilinear motion,
a pump driving source (3),
an annular support body (5) that is integrally provided in the machine body such as to be positioned above the outer valve,
a hopper (6) that is directly or indirectly set on a wall of the annular support body,
a hopper upper lid (8) that is freely fitted onto the hopper,
a vertical rotation shaft (9) that passes through a center portion of an upper wall of the hopper upper lid and has a stirring blade in a long rod-like lower end portion,
a stirring motor (14) of which a lower end portion of an output shaft and an upper end portion of the vertical rotation shaft are connected by an engaging and detaching means,
an upper-portion housing box (1d) that includes the stirring motor therein and is pivotally supported to an upper-end edge portion of the machine body such as to freely rotate, and
a control unit that controls driving of the pump drive source, wherein
soup that is housed in the hopper is supplied in fixed quantities through rotation of the inner valve (26) and back-and-forth movement of the plunger (30),
the engaging and detaching means (61) is configured by a cylindrical first engaging body (62) that is provided in a state such as to be fitted outside a lower end portion of an output shaft (14a) of the stirring motor and has an engaging portion, and a cylindrical second engaging body (63) that has an engaged portion that is engaged with and detached from the engaging portion and is provided in a state such as to be fitted outside an upper end portion of the vertical rotation shaft,
a lateral-direction engagement hole (64) that communicates with an insertion hole (10) that is formed in the upper end portion of the vertical rotation shaft is formed in the cylindrical second engaging body,
a rod-shaped inserting portion (65b) of a lock bolt (65) is inserted into the engagement hole and the insertion hole, and
when at least the hopper upper lid and the vertical rotation shaft are cleaned, in a state in which a free end portion of the upper-portion housing box is lifted upwards and the hopper upper lid is removed from the hopper, the lock bolt is pulled out of the engagement hole and the insertion hole, and the cylindrical second engaging body (63), the vertical rotation shaft (9), and the hopper upper lid (8) are thereby disassembled.

2. The soup supply apparatus according to claim 1, **characterized in that**:
an urging means (66) that is wound around a stirring motor output shaft that passes through a bottom wall of the upper-portion housing box (1d) is provided between the bottom wall of the upper-portion housing box and an upper portion of the cylindrical first engaging body; and
the urging means urges the cylindrical first engaging body that is provided such as to freely slide in an axial direction of the stirring motor in a direction engaging with the cylindrical second engaging body that is capable of rotating in a predetermined position at all times.

3. The soup supply apparatus according to claim 1, **characterized in that**:
a short cylindrical bearing member (60) that supports the vertical rotation shaft is fixedly provided in a center portion of an upper wall of the hopper upper lid (8).

4. The soup supply apparatus according to claim 1, **characterized in that**:
a temperature sensor (55) that detects a temperature of the hopper (6) is provided on an inner circumferential wall between an upper end opening and a lower end opening of the annular support body, and
the control unit displays the temperature of the hopper detected by the temperature sensor in a display unit (21a) that is provided in the machine body (1).

5. The soup supply apparatus according to claim 4, **characterized in that**:
the machine body (1) has a pair of left and right operating boxes (1c) that protrude in a substantially horizontal state from a front wall of a vertical control box (1b) in which the control unit and a power supply board are provided therein, and
the display unit (21a) that displays a temperature of the soup is provided on a front surface of at least either of the pair of left and right operating boxes.

6. The soup supply apparatus according to claim 1, **characterized in that**:
the control unit transmits at least a plurality of pieces of information related to soup that is stored in the storage unit to the periphery of the machine body (1) via an information transmitting means.
